# EUROPEAN PATENT APPLICATION

(11) **EP 4 756 217 A1**
(43) Date of publication of application: **10.06.2026**
(21) Application number: 24307052.1
(22) Date of filing: 09.12.2024
(51) Int. Cl.: F03D 17/00, F03D 80/30

(54) **METHOD FOR DYNAMIC MONITORING OF A LIGHTNING PROTECTION SYSTEM OF A WIND TURBINE BLADE**

(71) Applicant: TotalEnergies OneTech, 92400 Courbevoie (FR)
(72) Inventor: Capaldo, Mattéo, 92400 Courbevoie (FR); Fajar, Mohammed, 92400 Courbevoie (FR); Tayat, Faradj, 92400 Courbevoie (FR)
(74) Representative: Bandpay & Greuter

(57) **Abstract**

The disclosure notably relates to a method for dynamic monitoring of a lightning protection system (LPS) of a wind turbine blade. The method comprises one or more iterations of, by an emitter connected to the LPS, sending an electrical signal through the LPS. The method also comprises, by a receiver connected to the LPS, receiving the electrical signal from the LPS. The method also comprises determining a health state of the LPS by performing a computer-implemented processing of a signal of the electrical signal received by the receiver.

## Description

### TECHNICAL FIELD

The disclosure relates to the field of lightning protection systems, and more specifically to a method and system for dynamic monitoring of a lightning protection system of a wind turbine blade.

### BACKGROUND

A number of systems are offered on the market for lightning protection of turbine blades. In particular, lightning protection systems (LPS) are of growing importance for wind turbine blades. Indeed, wind turbine blades are particularly exposed to a variety of risks that may induce failures. In particular, lightnings account for more than 20% of blade failures. LPSs are therefore essential for ensuring the safety and durability of wind turbine blades. However, the performance of lightning protection systems may degrade over time and/or due to damages caused by lightning. Traditional techniques for verifying the integrity of the LPS rely on on-site visual and intrusive inspections of the blades. These techniques are particularly tedious, expensive and/or perilous to implement, be it on wind turbines installed on land or at sea. In addition, said techniques may be costly in terms of resources and may require qualified personnel on-site, which can be restrictive for very isolated sites.

Within this context, there is still a need for an improved method for dynamic monitoring of an LPS of a wind turbine blade.

### SUMMARY

It is therefore provided a method for dynamic monitoring of a lightning protection system (LPS) of a wind turbine blade. The method comprises one or more iterations of, by an emitter connected to the LPS, sending a electrical signal through the LPS. The method also comprises, by a receiver connected to the LPS, receiving the electrical signal from the LPS. The method also comprises determining a health state of the LPS by performing a computer-implemented processing of a signal of the electrical signal received by the receiver.

The method may comprise one or more of the following:
- the processing of the signal comprises comparing the signal to one or more reference signals each of an electrical signal traversing the LPS;
- the one or more reference signals include a signal corresponding to a normal functioning of the LPS and/or one or more other signals each corresponding to a respective failure of the LPS;
- the method further comprises an initial stage that comprises learning the one or more reference signals;
- the method further comprises outputting an alert when the comparison results in determination that the signal corresponds to a failure of the LPS;
- the emitter and the receiver are located in a hub of the wind turbine;
- the method is automated, preferably the method being iterated several times, more preferably between one time a week and one time a day; and/or
- the one or more iterations comprise several iterations performed repeatedly at regular time intervals.

It is further provided a system for dynamic monitoring of a lightning protection system (LPS) of a wind turbine blade. The system is configured for performing the method. The system comprises the emitter, the receiver, and a computer system configured for performing the processing of the signal.

It is further provided a wind turbine equipped with the system.

### BRIEF DESCRIPTION OF THE DRAWINGS

Non-limiting examples will now be described in reference to the accompanying drawings, where:

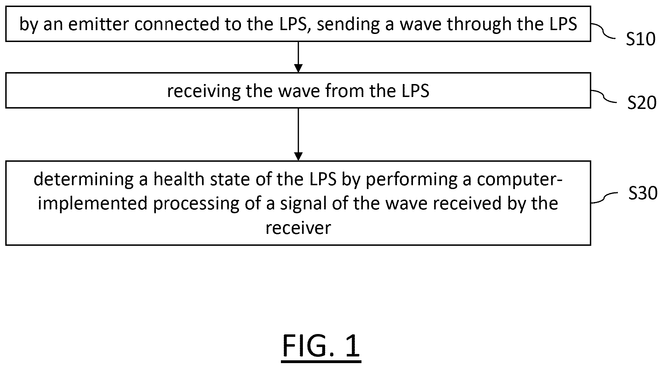

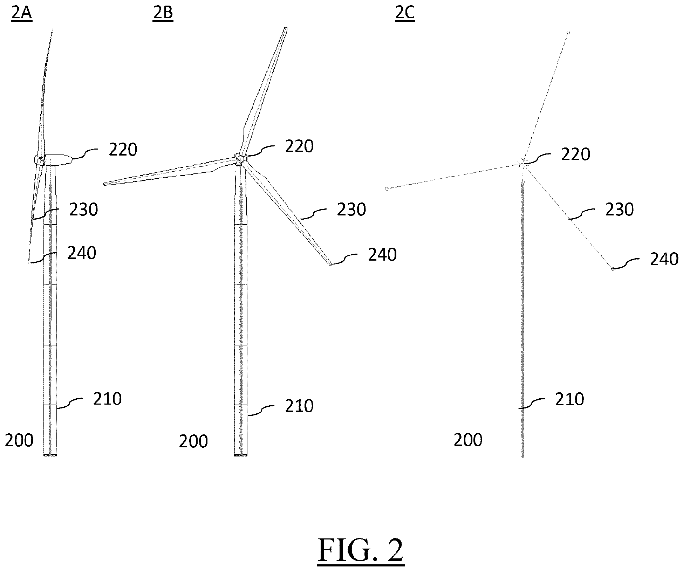

- FIG. 1 illustrates the method; and
- FIG.s 2 to 7 provide examples of the method and the system.

### DETAILED DESCRIPTION

With reference to FIG. 1, it is proposed a method for dynamic monitoring of a lightning protection system (LPS) of a wind turbine blade. The method comprises one or more iterations of, by an emitter connected to the LPS, sending S10 an electrical signal through the LPS. The method also comprises, by a receiver connected to the LPS, receiving S20 the electrical signal from the LPS. The method also comprises determining S30 a health state of the LPS by performing a computer-implemented processing of a signal of the electrical signal received by the receiver.

Such a method improves the monitoring of the LPS.

Notably, the method allows to determine a change in a health state of the LPS automatically, thanks to the processing of the signal of the wave. The determined health state of the LPS yields an indicator on how well the LPS operates on the wind turbine blade. Thus, if the health state indicates that the LPS does not operate as expected at a given time, a user or company may act to repair the LPS and put it back in an operational state. The method performs sending, receiving the electrical signal and determining the health state at one or more iterations. The iterations thus enable a dynamic monitoring of the health state of the LPS over time. That is, the method enables preventive and/or corrective maintenance of the LPs over time according to the health state of the LPS. Moreover, the processing of the signal may be performed either directly by a computer-system embedded in the wind turbine, or may be performed by a remote computer-system (in which case the wind turbine may still be equipped with a computer system which sends the signal to the remote computer). The remote computer system may be a server. Thus, the method allows remote monitoring of the LPS. This reduces the need for moving onsite to perform measurements.

The method uses the principles of reflectometry. Reflectometry refers generally to any kind of method for the use of the reflection of electrical signals or pulses at surfaces and interfaces to detect or detect faults on an object. As known per se in the field of reflectometry, such method may comprise providing a electrical signal of any kind of wavelength, e.g., radar, lidar, electric pulses, with an electrical signal emitter, and then receiving it with a receiver. If the electrical signal encounters a geometric change in the conductive medium or a discontinuity during its propagation from the emitter to the receiver, e.g., due to a fault present on the LPS, part of its energy is lost and a modified/disturbed/anormal signal is returned to the receiver. Thus, there is no risk of damaging the components. Consequently, the sending S10 and the receiving S20 thus enable a non-invasive diagnostic of the LPS, as the returned signal thus provides information on the fault. The use of reflectometry offers several advantages which are further discussed hereinbelow.

The method thus enables that the LPS is always operational, thereby maintaining wind turbine. Indeed, the method may form part of a process for repairing the LPS. The process may take into account the determined health state of the LPS to determine a reparation or replacement of a part of the LPS.

It is further provided a system for dynamic monitoring of a lightning protection system (LPS) of a wind turbine blade, the system being configured for performing the method. The system comprises the emitter, the receiver, and a computer system configured for performing the processing of the signal.

The system may incorporate a disjunctor configured to open the line between the emitter and the receptor when a high current and voltage is detected in the line, and to emit an opening signal to the computer system.

In examples, the disjunctor together with a "fusible" may be considered to protect the emitter/receiver. Once the emitter/receiver is disconnected, the system may be configured to send an alarm to the client.

This configuration protects the emitter and receiver from lightning strikes.

It is further provided a wind turbine equipped with the system.

The method is for dynamic monitoring of a lightning protection system, LPS. In other words, the method is for monitoring the health state of the LPS as it evolves under operation in the wind turbine blade. The LPS is configured to divert incoming electrical current into the ground, thereby protecting rotor blades of the wind turbine from damage. The LPS may be any known LPS.

Reference is made to FIG.s 2A to 2C, illustrating an example wind turbine 200 equipped with the system, viewed from a side view 2A, a front view 2B and a schematic view 2C. The wind turbine 200 of the example comprises a tower frame 210, a hub and a nacelle 220, and blades 230. The LPS comprises a lightning receptor (*i.e.* in each blade). The LPS also comprises a down conductor that directs lightning from the receptor to the ground. The conductor may comprise a first conductor portion (*i.e*. in each blade) from the lightning receptor to the hub portion, and second conductor portion from the hub portion to the ground. The lightning sensor is mounted at a distal portion 240 of a respective blade 230. The down conductor may be installed externally to the blade 230 towards the hub and then pass through the tower frame 210 to the ground.

The schematic view 2C illustrates the LPS mounted in the blades of the wind turbine, in a simplified way, as a tree topology network.

The tree topology network is composed of three upper branches that model the part of the LPS in each of the blades 230. The receptor 240 is located at a distal portion of the blade. The down conductor links the receptor 240 to the ground by passing through the blade 230 to the hub 220 and from the hub to the ground through the tower frame 210. The down conductor is shown as a lower branch passing through the tower frame 210. The down conductor is configured to serve as an energy conductor. The down conductor thereby conducts energy when hit by lightning. In other words, the baseline directs the lightning to the ground through the tower.

The emitter and the receiver may be located in the hub of the wind turbine 200 or at the blade root. This allows for an acquisition of the signal that is close to the blades and therefore diagnosis of the health state of the LPS is more precise. Indeed, as the emitter and the receiver are located in the hub, this location reduces the interference effects of the contact brushes between the hub 220 and the nacelle and between the nacelle and the tower frame 210. Thus, the emission of the electrical signal is performed without added noise from the interference effects. The computer system that performs the processing may be located in the hub. In that case, the method may perform the processing S30 locally and optionally transmit the results of the processing to a remote system or server. In that case, upon detection of an anormal functioning of the LPS, the system may send an alert to an outside operator, to alert for a necessary maintenance operation. Alternatively, the computer system may be located remotely, and the emitter and receiver may be connected to a local computer (*e.g*. also located in the hub) configured to transmit the signal (raw or preprocessed to as to be processable by the remote computer system) to the remote computer system. The remote computer system may the perform the processing S30 remotely. The transmission may be performed via a network, e.g., a wireless network such as a Radio or Wi-Fi network or a wired network. The computer-system that performs the post-processing may also be configured to send instructions to the emitter and receiver to start the method (*i.e*. to start sending electrical signals through the LPS and receiving them).

The method may be automated. In other words, at least some steps (e.g., all) of the method are triggered without user intervention. Preferably, the method is iterated several times (e.g*.*, more than one time). More preferably, the method is iterated between one time a week and one time a day.

Each iteration performs the steps of the sending S10, the receiving S20 and the determining S30. The method may perform iterations repeatedly, e.g., at a predetermined time interval. The predetermined time interval may be regular or irregular. For example, the method may perform at least two iterations within a time interval of 5 minutes or more, for example 10 minutes, or even an hour.

The one or more iterations may comprise several iterations performed repeatedly at regular time intervals. For example, the method may automatically perform several iterations at a predetermined period of time, e.g., every 5 minutes or more. The regular time interval may be chosen in any manner so as to obtain a desired reaction time for the dynamic monitoring of a lightning protection system: relatively low time intervals (e.g., in the order of minutes or hours) make the method more responsive to events that may degrade the health state of the LPS. Thus, the method enables a fast response time for repairing the LPS.

When performing an iteration the method comprises, by an emitter connected to the LPS, sending S10 an electrical signal through the LPS. The emitter may be a device configured to recharge, store and release the electrical signal to the LPS. The emitter may be configured to send an electrical charge corresponding to the electrical signal. The emitter may be connected to the lightning receptor via a conductor or transmission line. In examples, the conductor may be a mesh integrated on the blade.

When performing an iteration the method comprises, by a receiver connected to the LPS, receiving S20 the electrical signal from the LPS. The receiver may be a device configured to receive the electrical signal from the LPS. The emitter and the receiver are thus connected to the LPS, *e.g*. by being connected, for each blade, to the down conductor that transmits lightning from the lightning receptor to the ground. In other words, the remitter may be configured (for each blade) to send a electrical signal toward the LPS lightning receptor in the down conductor that connects that receptor to the ground, and the receiver may be configured to receive that electrical signal after it has travelled to the lightning receptor and back to the hub. The receiver may receive a electrical signal having an energy loss due to the electrical signal passing through a defect on the lightning receptor. The emitter may be configured to receive instructions (*e.g*. from the computer system) for triggering the sending S10. The receiver may be configured to transmit the received electrical signal S20 to the computer system (e.g*.,* located at a remote location) for performing the determination S30.

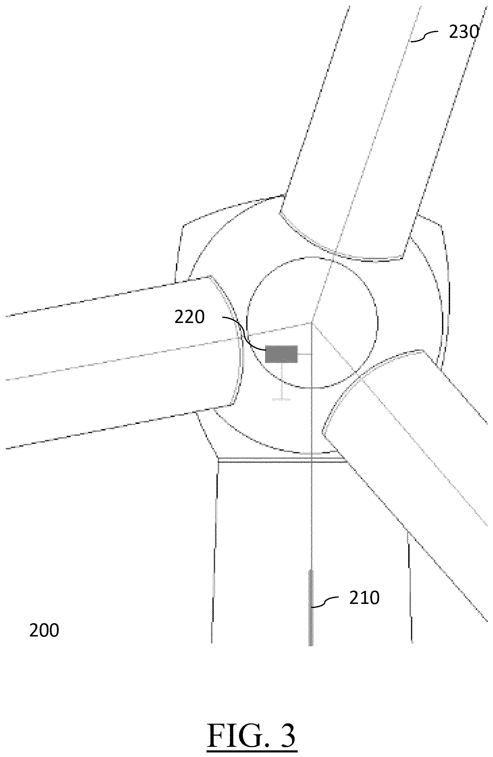

FIG. 3 shows an enlarged view of the wind turbine 200. The enlarged view shows the emitter and the receiver located in the hub 220 of the wind turbine 200. The enlarged view also shows a portion of the blade 230 and a portion of the tower frame 210.

Optionally, the emitter and the receiver may be located on a lower portion of the tower of the wind turbine.

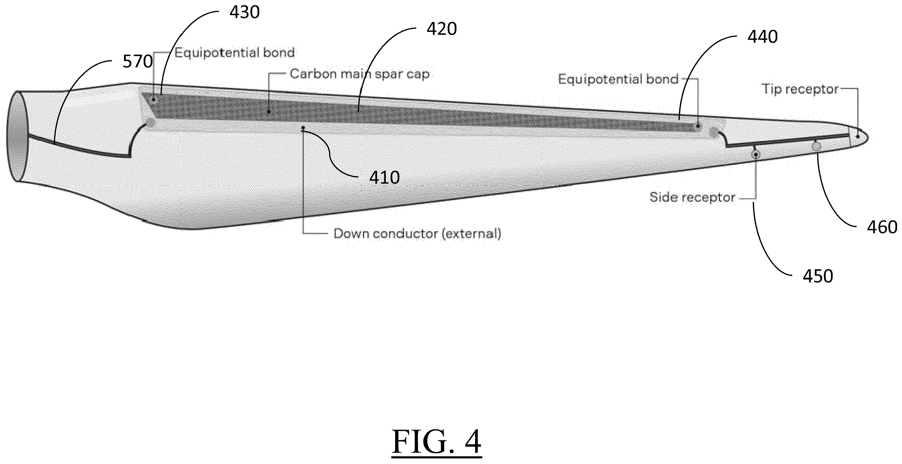

FIG. 4 shows an example of a view of the wind turbine blade 400. The wind turbine blade 400 of the example is a carbon fiber blade, with an external down conductor. The external down conductor is a mesh 410. Below the mesh there is a carbon main spar cap 420, and equipotential bonds 430, 440. The external down conductor is in other words a transmission line for transmitting the electrical signal from to the LPS 460 via a side receptor 450. The external down conductor is connected to the emitter and the receiver 470 via the equipotential bond 430.

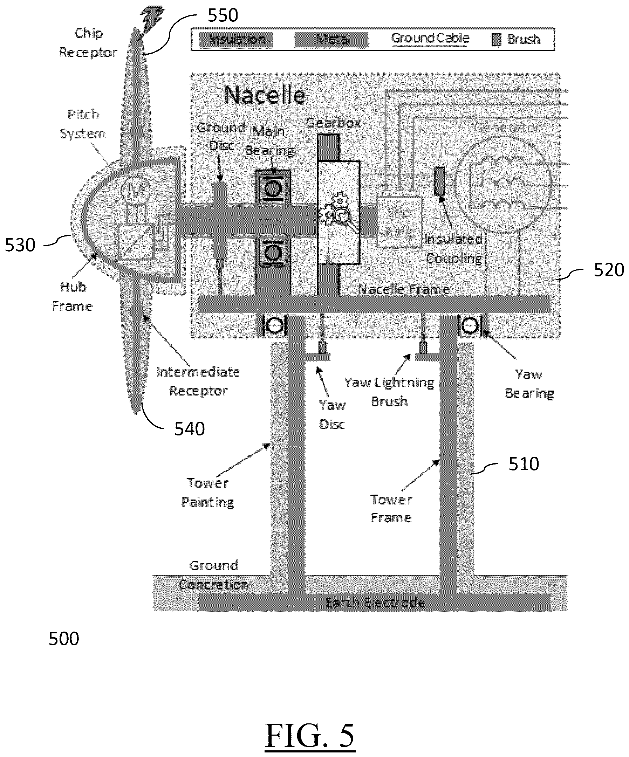

FIG. 5 illustrates another example of the wind turbine 500. The wind turbine of the example illustrates a tower frame 510, a nacelle 520, a hub frame 530, blades 540, and a chip receptor 550 of the LPS.

The method determines S30 a health state of the LPS by performing a computer-implemented processing of a signal of the electrical signal received by the receiver.

The computer-implemented processing is based on the principles of reflectometry. The processing may comprise sending instructions for injecting a electrical signal as a probe signal to the LPS, through the emitter, and analyzing the signal (by comparing the signal with the one or more reference signals) returned from the emitter to detect and locate changes or faults on the LPS.

The signal may be a time-varying voltage or current that represents the electrical signal as received by the receiver. The signal may be of a predetermined duration. By processing it is meant any set of computations applied to the signal, e.g., signal analysis, such as comparison to one or more reference signals as further discussed hereinafter. By "health state" it is meant any information related to the operational state of the LPS represented by the signal. For example, a health state may comprise a "normal" or "healthy" state (i.e., indicative of a normal operational functioning of the LPS) and/or a "damaged" or "unhealthy" or "failure" state (e.g., indicative of a degraded performance or partial, even complete damage). In examples, the health state may comprise ranges of values indicative of the operational state of the LPS, e.g., between 0 and 1. A value of 0 may indicate that the LPS is damaged, while a value of 1 may indicate that the LPS is fully operational. In other examples, the health state may comprise a plurality of "failure" states, each corresponding to a different failure of the LPS.

A characterization of the LPS "in good health" is previously received, for example by the manufacturer or by an initial measurement on an already implemented LPS. Then, while executing the method, the health state of the LPS is preferably determined by comparison with the characterization of the received LPS "in good health".

The processing is computer-implemented. This means that steps of the processing are executed by at least one computer, or any system alike. Thus, steps of the processing are performed by the computer, possibly fully automatically, or, semiautomatically. In examples, the triggering of at least some of the steps of the processing may be performed through user-computer interaction. The level of user-computer interaction required may depend on the level of automatism foreseen and put in balance with the need to implement user's wishes. In examples, this level may be user-defined and/or pre-defined. The computer may be installed in the hub or may be located at a remote location as previously discussed. In such a case, the emitter and receiver may be connected to a local computer system configured to transmit (e.g., through a network) the signal of the electrical signal received by the receiver to the computer that performs the processing.

A typical example of computer-implementation of a processing is to perform the processing with a system adapted for this purpose. The system may comprise a processor coupled to a memory (and optionally a graphical user interface (GUI)), the memory having recorded thereon a computer program comprising instructions for performing the processing. The memory may also store a database. The memory is any hardware adapted for such storage, possibly comprising several physical distinct parts (e.g. one for the program, and possibly one for the database).

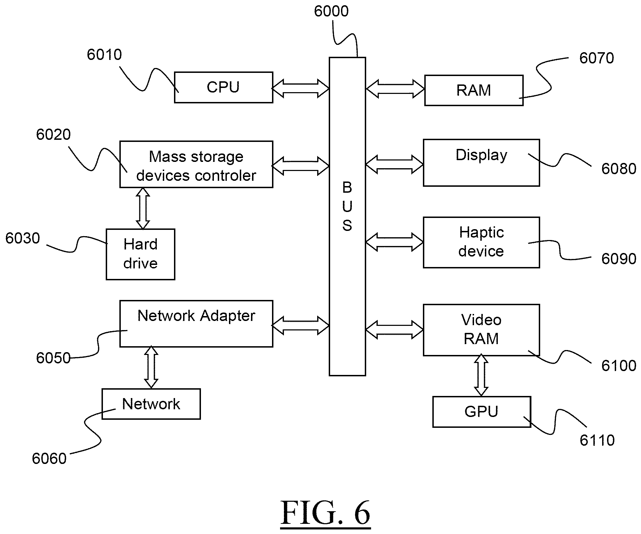

FIG. 6 shows an example of the (remote) computer system, wherein the computer system is a client computer system, *e.g*. a workstation of a user.

The client computer of the example comprises a central processing unit (CPU) 6010 connected to an internal communication BUS 6000, a random access memory (RAM) 6070 also connected to the BUS. The client computer is further provided with a graphical processing unit (GPU) 6110 which is associated with a video random access memory 6100 connected to the BUS. Video RAM 6100 is also known in the art as frame buffer. A mass storage device controller 6020 manages accesses to a mass memory device, such as hard drive 6030. Mass memory devices suitable for tangibly embodying computer program instructions and data include all forms of nonvolatile memory, including by way of example semiconductor memory devices, such as EPROM, EEPROM, and flash memory devices; magnetic disks such as internal hard disks and removable disks; magneto-optical disks. Any of the foregoing may be supplemented by, or incorporated in, specially designed ASICs (application-specific integrated circuits). A network adapter 6050 manages accesses to a network 6060. The client computer may also include a haptic device 6090 such as cursor control device, a keyboard or the like. A cursor control device is used in the client computer to permit the user to selectively position a cursor at any desired location on display 6080. In addition, the cursor control device allows the user to select various commands, and input control signals. The cursor control device includes a number of signal generation devices for input control signals to system. Typically, a cursor control device may be a mouse, the button of the mouse being used to generate the signals. Alternatively or additionally, the client computer system may comprise a sensitive pad, and/or a sensitive screen.

The computer program may comprise instructions executable by a computer, the instructions comprising means for causing the above system to perform the processing. The program may be recordable on any data storage medium, including the memory of the system. The program may for example be implemented in digital electronic circuitry, or in computer hardware, firmware, software, or in combinations of them. The program may be implemented as an apparatus, for example a product tangibly embodied in a machine-readable storage device for execution by a programmable processor. Processing steps may be performed by a programmable processor executing a program of instructions to perform functions of the processing by operating on input data and generating output. The program may also comprise instructions to trigger the sending S10 and the receiving S20. The processor may thus be programmable and coupled to receive data and instructions from, and to transmit data and instructions to the emitter and the receiver. The application program may be implemented in a high-level procedural or object-oriented programming language, or in assembly or machine language if desired. In any case, the language may be a compiled or interpreted language. The program may be a full installation program or an update program. Application of the program on the system results in any case in instructions for performing the processing. The computer program may alternatively be stored and executed on a server of a cloud computing environment, the server being at a remote location, in communication across a network with the emitter and the receiver. In such a case a processing unit executes the instructions comprised by the program, thereby causing the processing to be performed on the cloud computing environment. The processing may transmit instructions to trigger the sending S10 and the receiving S20, e.g., transmitting instructions at regular time intervals.

The processing of the signal may comprise comparing the signal to one or more reference signals. Each reference signal is of a electrical signal traversing the LPS. A reference signal disclosed herein may be indicative of a predetermined health state of the LPS as the electrical signal traverses the LPS prior to being received by the receiver. Comparing the signal and the reference signal may comprise determining a distance between the signal and the reference signal over the predetermined duration of the signal, e.g., a mean square value of the difference between the signal and the reference signal.

The one or more reference signals may include a signal corresponding to a normal functioning of the LPS. One or more other signals may each correspond to a respective failure of the LPS.

The method determines a health state of the LPS based on the result of the comparison. If the comparison results in that the signal corresponds to a respective failure of the LPS, the determined health state of the LPS may be a "failure" state. The failure state may be denoted, e.g., as "failure 1", "failure 2", "failure N", where N is a positive integer. A failure state may correspond to a state in which the LPS does not function correctly, e.g., when there is a fault in the LPS. The failure state may for example correspond to the down conductor being shorted (i.e., presenting a short circuit), the down conductor being open, or the conductor being split, or frayed. If the comparison results in that the signal corresponds to a normal functioning of the LPS, the determined health state may be a "healthy" state.

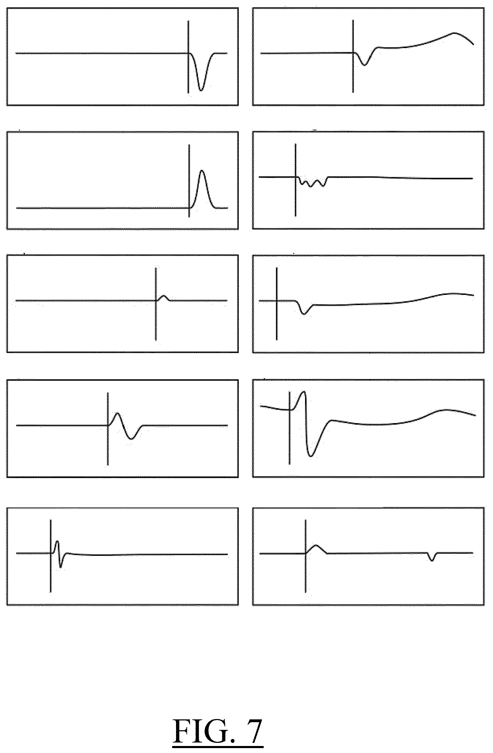

FIG. 7 illustrates examples of signals each corresponding to a respective failure of the LPS and which the method can detect.

The method may further an initial stage. The initial stage is performed prior to the one or more iterations of the sending S10, the receiving S20 and the determining. The initial stage may comprise learning the one or more reference signals.

Learning the one or more reference signals may comprise training a neural network based on a dataset.

A neural network is a function comprising a collection of connected nodes, also called "neurons". Each neuron receives an input and outputs a result to other neurons connected to it. The artificial neurons and the connections linking each of them have weights, which are adjusted via a training.

The neural network trained on the dataset may be configured to take as input a signal and to output a label indicative of a health state of the input signal. In other words, the neural network is trained to determine the extent by which the signal indicates a failure of the LPS after the signal has traversed it via reflectometry.

The dataset may comprise data pieces. Each data piece may comprise a signal. Each signal corresponding to a electrical signal received by a receiver after emitting the weave to the LPS. Each signal may be of a predetermined time period. The data piece may also comprise an annotation indicative of the health state associated to the signal.

As known per se from the field of machine learning, the total number of data pieces depends on the contemplated quality of the learning. This number can be higher than 100, 1.000, 10.000, 50.000 or yet 100.000. The number of data pieces may be chosen in any manner so as to achieve a good tradeoff between the speed of the learning and the accuracy of the output reference signals.

The training may be supervised. The training method may set part of the data of the dataset to be used as ground truth data. The dataset may be thus used for training the neural network in supervised mode. As known from the field of machine learning, the neural network may thus compare the output with the ground truth data, the weights of the neural network may be adjusted by the training so that the output of the neural network is consistent with the ground truth data

The dataset allows to capture deviations and different anomalies, as represented by each signal.

The initial stage may further comprise comparing the signal with an initial (e.g., learned) reference signal. The method may first send the electrical signal S10 through the LPS, receiving the electrical signal S20 from the LPS and performing an initial comparison of the signal with the initial reference signal. In other words, upon startup of the method, a real-time scan of the LPS is carried out and compared to the initial reference signal in order to identify deviations from the initial reference signal.

The method may further comprise outputting an alert when the comparison results in determination that the signal corresponds to a failure of the LPS. The alert may comprise a visual cue, e.g., a message displayed on a screen, an audio output and/or a text output, e.g., an alarm message sent to a user.

In the example, at an iteration, the method may send S10 the electrical signal, by the emitter, to the LPS. The emitter is connected to the LPS through a conductive medium. The conductive medium is a transmission line running along the blade. The method receives S20 the electrical signal, by the receiver, from the LPS. If the electrical signal encounters a geometric change in the conductive medium or a discontinuity during its propagation from the emitter to the receiver, part of its energy is returned to the receiver. The emitter and the receiver may be located at substantially the same location, e.g., in the hub of the wind turbine. The method performs a computer-implemented processing of the electrical signal received by the receiver to deduce information such as the location and nature of the change.

The processing of the signal comprises comparing the signal to one or more reference signals each of an electrical signal traversing the LPS. If the comparison results in that signal corresponds to a respective failure of the LPS, the determined health state of the LPS may be a "failure" state, If the comparison results in that the signal corresponds to a normal functioning of the LPS, the determined health state may be a "healthy" state. The method outputs an alarm when the signal corresponds to a failure of the LPS, e.g., when determining that the health state is an "failure" state. The user may thus perform onsite corrective action or maintenance on the LPS. If the determined state is a "healthy" state, the user is reliably indicated that there is no need for corrective action or maintenance on the LPS.

The method thus has the following advantages: The method only requires one access point of the wind turbine blade to measure the received electrical signal. The other end, where the LPS is found, is inaccessible. The method is not obtrusive, i.e., there is no need to disconnect or inhibit the protection system in place. The method enables the identification and location of a degradation or a fault of the LPS.

The use of reflectometry methods is particularly advantageous over other types of techniques such as zone arc fault detection schemes, dielectric dissipation methods (which are difficult to put in place due to weak currents), high voltage techniques (which are intrusive and complicated to put in place, and possibly degrading the LPS if implemented), low voltage techniques, broadband impedance spectroscopy, power line communication testing methods. All of the aforementioned methods are difficult to implement and/or risk degrading the LPS, e.g., as is the case of high voltage techniques. However, reflectometry methods are non-invasive. Thus, the execution of the method does not interfere with the proper functioning of the system or cause damage. The method is completely automatic and does not require human intervention. The method has a competitive cost compared to a traditional method, all thanks to the automation.

## Claims

1. A method for dynamic monitoring of a lightning protection system (LPS) of a wind turbine blade, the method comprising one or more iterations of:
- by an emitter connected to the LPS, sending (S10) an electrical signal through the LPS;
- by a receiver connected to the LPS, receiving (S20) the electrical signal from the LPS; and
- determining (S30) a health state of the LPS by performing a computer-implemented processing of a signal of the electrical signal received by the receiver.

2. The method of claim 1, wherein the processing of the signal comprises comparing the signal to one or more reference signals each of an electrical signal traversing the LPS.

3. The method of claim 2, wherein the one or more reference signals include a signal corresponding to a normal functioning of the LPS and/or one or more other signals each corresponding to a respective failure of the LPS.

4. The method of claim 2 or 3, wherein the method further comprises an initial stage that comprises learning the one or more reference signals.

5. The method of any one of claims 2 to 4, wherein the method further comprises outputting an alert when the comparison results in determination that the signal corresponds to a failure of the LPS.

6. The method of any one of claims 1 to 5, wherein the emitter and the receiver are located in a hub of the wind turbine.

7. The method of any one of claims 1 to 6, wherein the method is automated, preferably the method being iterated several times, more preferably between one time a week and one time a day.

8. The method of any one of claims 1 to 7, wherein the one or more iterations comprise several iterations performed repeatedly at regular time intervals.

9. A system for dynamic monitoring of a lightning protection system (LPS) of a wind turbine blade, the system being configured for performing the method of any one of claims 1 to 8, the system comprising the emitter, the receiver, and a computer system configured for performing the processing of the signal.

10. A wind turbine equipped with the system of claim 9.
